# EUROPÄISCHE PATENTSCHRIFT

(11) **EP 1 474 276 B1**
(45) Veröffentlichungstag und Bekanntmachung des Hinweises auf die Patenterteilung: **06.05.2015**
(21) Anmeldenummer: 03717180.8
(22) Anmeldetag: 21.01.2003
(51) Int. Cl.: B29C 47/20, B29C 47/88, B29C 47/08

(54) **BLASKOPF ZUM EXTRUDIEREN VON FOLIEN MIT SPANNELEMENTEN, DIE LEITUNGEN FÜR KÜHLLUFT ENTHALTEN UND VERFAHREN ZUR FIXIERUNG DER BLASKOPFEINHEIT**
BLOWING HEAD FOR EXTRUDING FILMS, COMPRISING CLAMPING ELEMENTS CONTAINING DUCTS FOR COOLING AIR AND METHOD FOR CLAMPING THE BLOWING HEAD ELEMENTS
TÊTE DE SOUFFLAGE POUR L'EXTRUSION DE FEUILLES, POURVUE D'ÉLÉMENTS DE SERRAGE CONTENANT DES CONDUITES D'AIR DE REFROIDISSEMENT ET PROCÉDÉ DE FIXATION D'ÉLÉMENT DE TÊTE DE SOUFFLAGE

(30) Priorität: 06.02.2002 DE 10204897
(43) Veröffentlichungstag der Anmeldung: 10.11.2004
(73) Patentinhaber: Windmöller & Hölscher KG, 49525 Lengerich (DE)
(72) Erfinder: SENSEN, Klemens, 49525 Lengerich (DE); MEYER, Ulrich, 49477 Ibbenbüren (DE)
(86) Internationale Anmeldenummer: PCT/EP2003/000564
(87) Internationale Veröffentlichungsnummer: WO 2003/066315

(56) Entgegenhaltungen:
- DE-C- 10 048 862
- GB-A- 1 253 454
- US-A- 3 471 899
- US-A- 4 003 972
- US-A- 4 069 282
- US-A- 4 236 884

## Beschreibung

Die Erfindung betrifft einen Schlauchfolienblaskopf (1) zum Extrudieren ein- oder mehrschichtiger Folie, welcher zumindest folgende Merkmale aufweist:
- einen ringförmigen Düsenspalt (11)
- Befestigungsmittel (15), die zumindest zwei Bauteile (5, 7, 8, 9) gegeneinander fixieren, welche gemeinsam innerhalb des Schlauchfolienblaskopfes kunststoffschmelzeführende Bereiche (14) begrenzen und welche (15) als kühlmittelführende Elemente (24) ausgestaltet sind,

Die extrudierten Schlauchfolien finden unter anderem in der Verpackungsmittelindustrie Verwendung.

Schlauchfollenblasköpfa der genannten Art werden zum Beispiel in der EP 0 626 247 A1, der US 5,069,612 und in der DE 100 01 363 A1 gezeigt. Bei allen Schlauchfolienblasköpfen dieser Art besteht die Notwendigkeit, Kunststoffschmelze, welche in Leitungen zugeführt wird, innerhalb des Blaskopfes so zu verteilen, dass sie relativ gleichmaßig einen ringförmigen Düsenspalt erreicht. Auf diese Weise wird die Kunststoffschmelze zu einem Folienschlauch geformt.

Unter anderem aus fertigungstechnischen Gründen (des Blaskopfes) wird in der Regel zumindest ein Teil des Verteilungsprozesses der Kunststoffschmelze von kunststoffschmelzeführenden Bereichen vorgenommen, welche von zumindest zwei Bauteilen begrenzt werden. Die vorgenannten Druckschriften zeigen, dass die geometrische Ausgestaltung dieser Bereiche in den unterschiedlichsten Formen vorgenommen werden kann.

Aufgrund des erheblichen Druckes, unter dem die Schmelze steht, wirken Kräfte, oft Auftriebskräfte genannt, auf diese Bauteile. Unter anderem diese Kräfte müssen von robusten Befestigungselementen aufgefangen werden, welche oft einen nicht unerheblichen Volumenbedarf haben.

Nach der Extrusion wird der Folienschlauch in der Regel einer Abquetsch- und später einer Reversiervorrichtung zugeführt. Diese Sachverhalte wie die Rolle von Blaskopf, Abquetschwalze und Reversierung sind bekannt und unter anderem der EP 0 873 846 A2 dargestellt.

Der Folienschlauch ist aufgrund dieser Situation nach oben und nach den Seiten abgeschlossen. Daher muss beispielsweise die Zu- und Abführung von Kühlmitteln wie beispielsweise Kühlluft zur Innenkühlung des Schlauches durch den Blaskopf erfolgen. Da auch die Leitungen zur Zuführung von Kunststoffschmelze, Befestigungselemente sowie elektrische Leitungen für Sensor- und Heizelemente und Ähnliches durch den Blaskopf geführt werden müssen, gestaltet sich der Aufbau eines Blaskopfes außerordentlich kompliziert. Insbesondere die US 5,538,411 zeigt die Kompliziertheit des Blaskopfaufbaus. In dieser Schrift werden unter anderem sowohl Befestigungselemente als auch Kühlmittelleitungen gezeigt.

Oft wird die Anordnung der erwähnten Leitungen zu Lasten der Bauhöhe des Blaskopfes vorgenommen. Die Bauhöhe soll jedoch eigentlich gering gehalten werden, um die Kunststoffschmelze zu schonen.

Daher zeigen die Schriften US 4,003,972, US 3,471,89, GB 1 253 454 und US 4 069 282 Blasköpfe, in denen jeweils ein Befestigungselement mit einer Kühlmittelleitung versehen ist. Als Weiterentwicklung derartiger Blasköpfe ist der in der DE 100 48 862 C1 patentierte Blaskopf anzusehen, der ein Befestigungselement aufweist, in dem zwei Kühlmittelleitungen integriert sind. Aufgrund dieser beiden integrierten Kühlmittelleitungen nimmt ein solches Befestigungselement ein erhebliches Bauvolumen ein.

Daher besteht die Aufgabe der vorliegenden Erfindung darin, einen Blaskopf vorzuschlagen, in welchem das Volumen des Blaskopfes effizienter genutzt wird.

Die Aufgabe wird durch den kennzeichnenden Teil des Anspruchs 1 gelöst.

Die vorteilhaften Anwendungsmöglichkeiten der Erfindung sind vielfältig.

Es empfiehlt sich, entweder die Befestigungsmittel, die Bohrungen oder beide Elemente mit thermisch isolierenden Materialien zu überziehen, da die Kühlmittel möglichst kühl durch den erheblich erwärmten Blaskopf gelangen sollen. In der Regel wird zumindest Luft als Kühlmittel verwendet.

Als Isolationsmaterial kommt unter anderem Teflon und gegebenenfalls Keramikmaterialien in Betracht. Da Gase wie Luft oder gar Vakuum sehr gute Isolationseigenschaften besitzen, können auch geeignete Hohlräume vorgesehen werden.

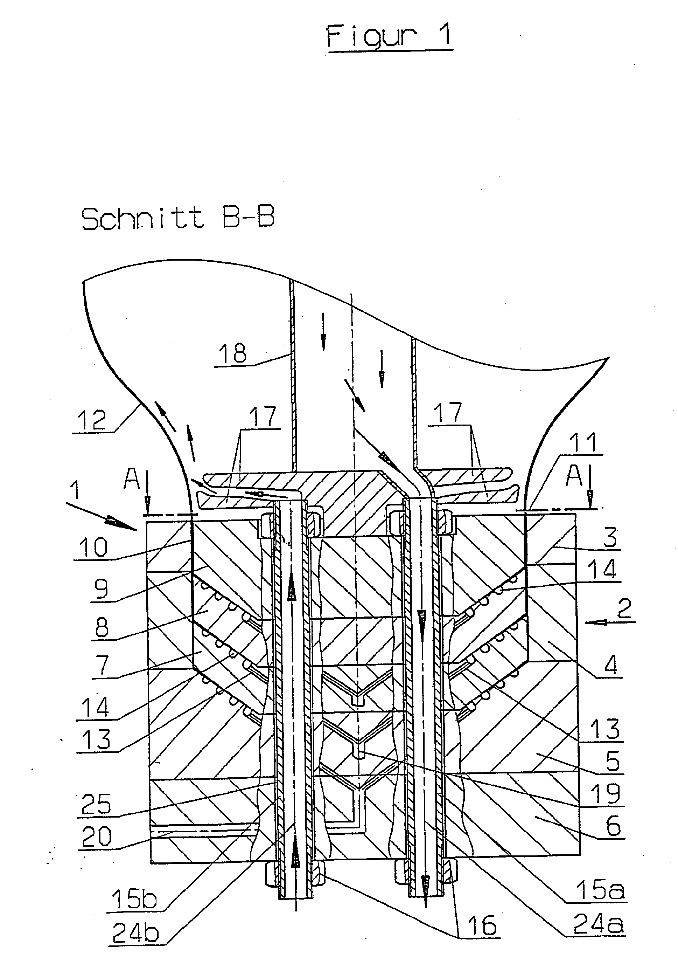

In vielen Blasköpfen nach dem Stand der Technik wird die Kühlluft durch Leitungen geführt, die in dem Blaskopf zentral liegen. Eine solche Anordnung der Luftleitungen verhindert jedoch die Zuführung der Schmelze durch Schmelzeleitungen, welche in Blasköpfen oft zentral geführt sind oder sich zumindest von einer zentralen Position verzweigen, wie in den Figuren 1 bis 5 gezeigt. Diesem Problem ist mit der a-zentrischen Anordnung insbesondere mehrerer Befestigungsmittel abzuhelfen.

Vorteilhafterweise haben die Befestigungsmittel die Form eines Kreiszylinders. Bei der Fixierung der verschiedenen Bauteile können die Befestigungsmittel wie insbesondere Schrauben, Systeme aus Gewindestangen und Muttern und Systeme aus Schrauben und Muttern wirken.

Wie schon mehrfach erwähnt werden erfindungsgemäße Befestigungselemente in der Regel von Kühlmitteln durchströmt und werden daher oft weniger erhitzt als das Gehäuse des Blaskopfes.

Diesen Umstand kann man sich zunutze machen, indem man die Befestigungselemente bei der Montage nur locker arretiert. Wenn der Blaskopf im Betrieb eine höhere Temperatur einnimmt als die Befestigungselemente wird er sich (bei gleichem oder ähnlichem Ausdehnungskoeffizienten) auch stärker als diese ausdehnen, so dass die Befestigungselemente stärker ausgereckt werden und gegebenenfalls ihre volle Fixierungswirkung entfalten.

Weitere vorteilhafte Ausführungsformen und Ausführungsbeispiele der Erfindung ergeben sich aus den weiteren Ansprüchen, der gegenständlichen Beschreibung und den Zeichnungen.

Die einzelnen Figuren zeigen:
- Fig. 1: einen Schnitt durch einen Blaskopf entlang der Linie B-B aus Figur 2
- Fig. 2: einen Schnitt entlang der Linie A-A aus Figur 1
- Fig. 3: einen Schnitt durch ein weiteres Ausführungsbeispiel der Erfindung
- Fig. 4: einen Schnitt durch ein weiteres Ausführungsbeispiel der Erfindung
- Fig. 5: einen Schnitt durch ein weiteres Ausführungsbeispiel der Erfindung

Figur 1 zeigt einen Schnitt durch ein Ausführungsbeispiel eines erfindungsgemäßen Schlauchfolienblaskopfes 1, dessen tragendes Teil das Gehäuse 2 ist, das wiederum aus dem äußeren Düsenring 3, dem Gehäusering 4, der Gehäusegrundplatte 5 und der Anschlussplatte 6 besteht. In dem krelszylinderförmigen Gehäuseinnenraum befinden sich vor allem die beiden Dorne 7 und 8 sowie der Düseninnenring 9. Die Bestandteile des Gehäuses 2 und die vorgenannten Teile 4 bis 6 begrenzen einen ringförmigen Spalt 10, durch welchen die Kunststoffschmelze zu dem Düsenspalt 11 gelangt und den Folienschlauch 12 bildet.

Die Kunststoffschmelze gelangt durch die Zuleitungen 13 in den vorgenannten Spalt 10. Vor der Mündung in den Spalt 10 sind die Zuleitungen als wendelförmige Nuten in den Dornen 7 und 8 sowie der Gehäusegrundplatte 5 ausgeführt. Hierbei werden die wenderförmigen Nuten jeweils von dem Bauteil 7, 8, 9, nach oben begrenzt, weiches sich über dem Bauteil 5, 7, 8 befindet, in welchem die Nuten eingebracht sind. Aufgrund des hohen Druckes, welcher in den Zuleitungen während des Betriebes herrscht, wirken große Auftriebskräfte auf die Dorne 7, 8 und den Düseninnenring 9, die durch die Befestigungsmittel 15 a und b aufgefangen werden müssen.

In dem in Figur 1 dargestellten Ausführungsbeispiel sind die Enden der Befestigungsmittel mit Außengewinden versehen, auf denen jeweils eine Mutter 16 aufgebracht ist. Die Befestigungsmittel 15 b enthalten Luftzuführungsleitungen 24 b durch die Luft zu den Kühllippen 17 der Luftinnenkühlung an den inneren Rand des Folienschlauches 12 geführt wird.

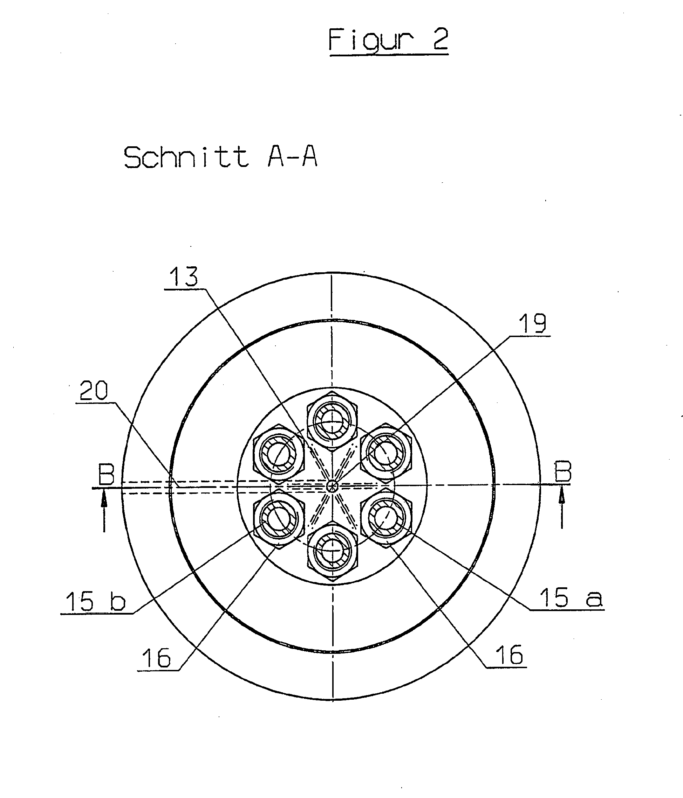

Die Abführung erwärmter Luft erfolgt durch das Standrohr 18 und die Befestigungselemente 15 a, welche Luftabführleitungen 24 a enthalten. Erwähnenswert ist noch die vorteilhafte Verteilung der Kunststoffschmelze durch Verzweigungspunkte 19, welche im Zentrum des Blaskopfes angeordnet sind, wie in Figur 2 ebenfalls ersichtlich. Den Verzweigungspunkten 19 wird die Schmelze über die zentralen Zuleitungen 20 zugeführt.

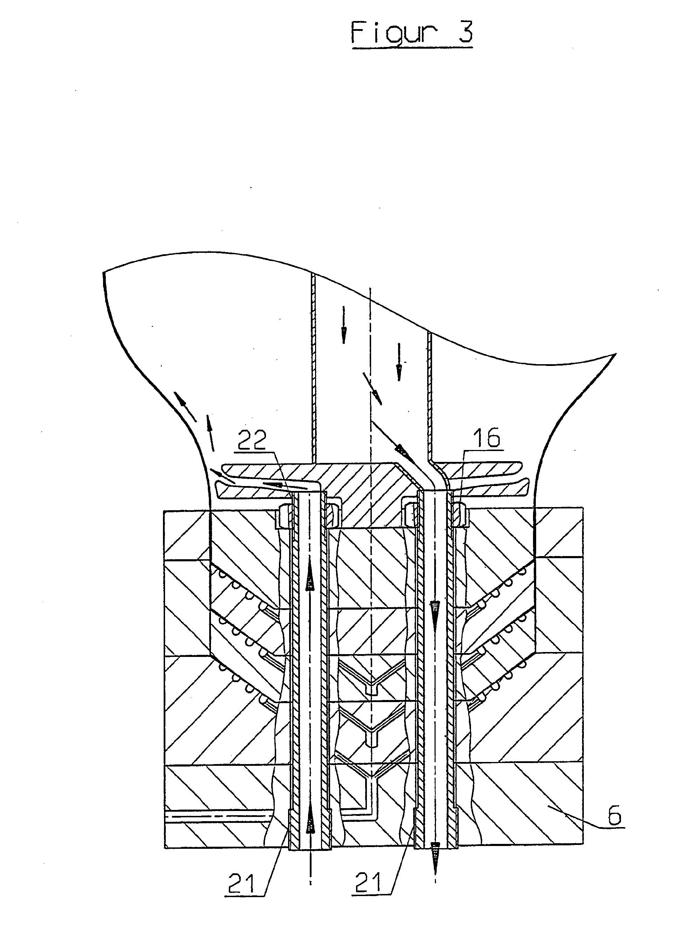

Die Figuren 3 bis 5 zeigen unterschiedliche Möglichkeiten der Arretierung der Befestigungselemente 15 auf. In Figur 3 ist der untere Teil der Bohrung für die Befestigungselemente in der Anschlussplatte 6 mit einem Innengewinde 21 versehen, in das das Außengewinde 22 der Befestigungselemente 15 hineingreift. Die oberen Enden der Befestigungselemente 15 sind wieder mit Außengewinden 22 und Muttern 16 versehen. Oft ist es vorteilhaft, den oberen Teil der Bohrung für die Befestigungselemente mit einem Gewinde zu versehen, und das Befestigungselement in dem genannten Gewinde zu verschrauben. Auf die zeichnerische Darstellung dieser Ausführungsform wurde jedoch verzichtet.

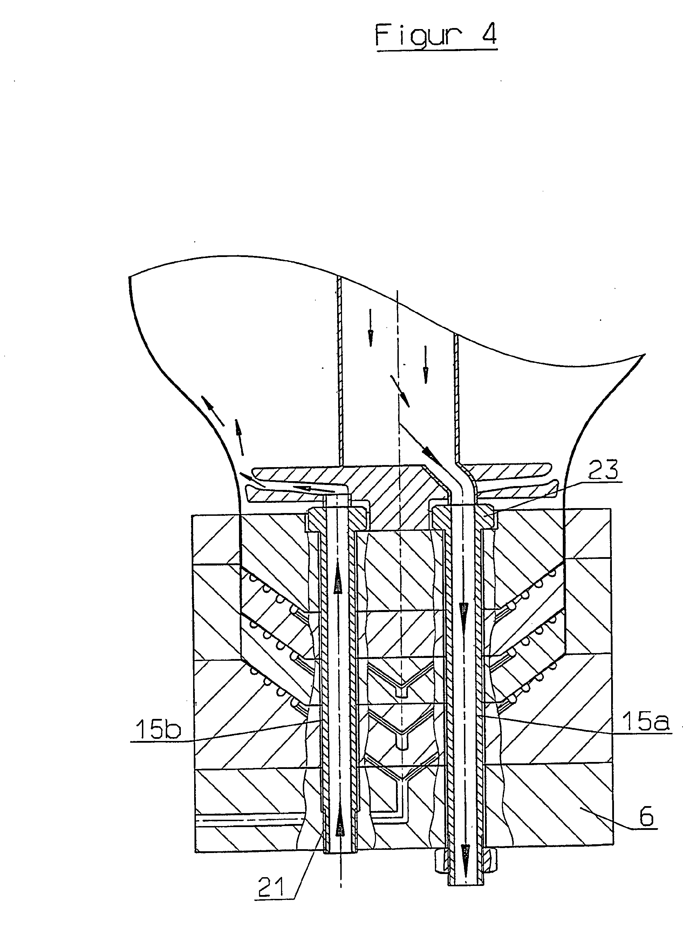

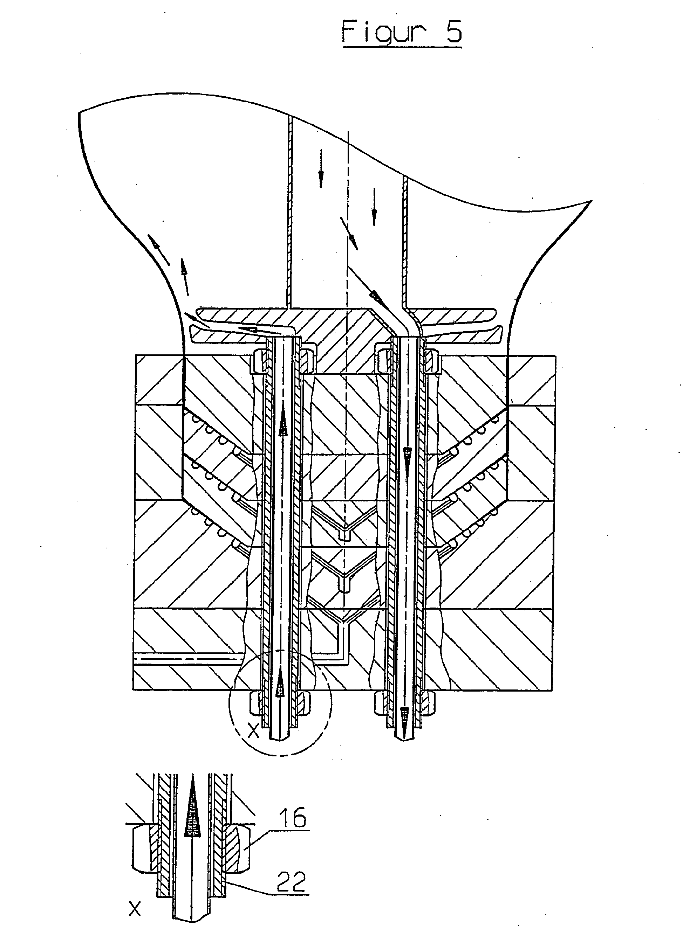

Bei Figur 4 nehmen Köpfe 23 die Rolle der letztgenannten Muttern 16 ein. Die Befestigung der unteren Enden des Befestigungselementes 15 b erfolgt wieder durch Verschrauben desselben 15 b mit der Anschlussplatte 6. Das Befestigungselement 15 a verfügt an dieser Stelle wieder über eine Mutter. Figur 5 veranschaulicht noch einmal die Befestigung der Befestigungselemente mit Muttern 16.

Bei den gezeigten Ausführungsbeispielen der Erfindung enthält ein Befestigungselement 15 jeweils eine Leitung 24. Es ist jedoch ebenso gut denkbar, dass Befestigungselemente eine Ab- 24 a und eine Zuführleifiung 24 b enthalten. Andere Befestigungselemente können auch ohne solche Leitungen 24 auskommen.

| **Bezugszeichenliste** | |
|---|---|
| 1 | Schlauchfolienblaskopf |
| 2 | Gehäuse |
| 3 | äußerer Düsenring |
| 4 | Gehäusering |
| 5 | Gehäusegrundplatte |
| 6 | Anschlussplatte |
| 7 | Dorn |
| 8 | Dom |
| 9 | innerer Düsenring |
| 10 | ringförmiger Spalt |
| 11 | Düsenspalt |
| 12 | Folienschlauch |
| 13 | Zuleitungen |
| 14 | wendelförmige Nuten |
| 15 a, b | Befestigungselemente |
| 16 | Mutter |
| 17 | Kühllippen |
| 18 | Standrohr |
| 19 | Verzweigungspunkte |
| 20 | zentrale Zuleitungen |
| 21 | Innengewinde der Bohrung für die Befestigungselemente |
| 22 | Außengewinde der Befestigungselemente |
| 23 | Kopf der Befestigungselemente |
| 24 a, b | Leitungen |
| 25 | Isolationsschicht des Befestigungselements |
| 26 | |
| 27 | |
| 28 | |

## Patentansprüche

1. Schlauchfolienblaskopf (1) zum Extrudieren ein- oder mehrschichtiger Folie, welcher zumindest folgende Merkmale aufweist:
• einen ringförmigen Düsenspalt (11)
• Befestigungsmittel (15), die zumindest zwei Bauteile (5, 7, 8, 9) gegeneinander fixieren, welche gemeinsam innerhalb des Schlauchfolienblaskopfes kunststoffschmelzeführende Bereiche (14) begrenzen
• wobei ein Befestigungsmittel (15) als kühlmittelführendes Element (24) ausgestaltet ist,
**dadurch gekennzeichnet, dass**
• eine Mehrzahl von als kühlmittelführende Elemente ausgestalteten Befestigungsmitteln (15) vorgesehen ist,
• wobei ein Teil der Befestigungsmittel (15) Kühlmittelzuführleitungen und ein anderer Teil Kühlmittelabführleitungen enthält.

2. Schlauchfolienblaskopf nach Anspruch 1,
**dadurch gekennzeichnet, dass**
die Bohrungen, durch welche die Befestigungsmittel (15) greifen, zumindest zum Teil mit einem thermisch isolierenden Material (25) verkleidet sind.

3. Schlauchfolienblaskopf nach Anspruch 1,
**dadurch gekennzeichnet, dass**
im Bereich der Bohrungen in dem Blaskopf (1), durch welche die Befestig gungsmittel (15) greifen, Hohlräume vorgesehen sind und/oder dass die Befestigungsmittel und die Innenwandungen der Bohrungen in dem Blaskopf (1) gemeinsam Hohlräume formen.

4. Schlauchfolienblaskopf nach einem der vorstehenden Ansprüche,
**dadurch gekennzeichnet, dass**
die Befestigungsmittel (15) azentrisch im Blaskopf (1) angeordnet sind.

5. Schlauchfolienblaskopf nach einem der vorstehenden Ansprüche,
**dadurch gekennzeichnet, dass**
die als kühlmittelführenden Elemente ausgestalteten Befestigungsmittel (15) den inneren Düsenring (9), die Dorne (7, 8) und die Anschlussplatte (6) durchgreifen und gegeneinander fixieren.

6. Schlauchfolienblaskopf nach einem der vorstehenden Ansprüche,
**dadurch gekennzeichnet, dass**
die als kühlmittelführende Elemente ausgestalteten Befestigungsmittel (15) alle Bauteile, die schmelzeführenden Bereiche begrenzen, durchgreifen.

7. Schlauchfolienblaskopf (1) nach einem der vorstehenden Ansprüche,
**dadurch gekennzeichnet, dass**
die Befestigungsmittel (15) zumindest zum Teil aus einem thermisch isolierenden Material (25) bestehen und/oder Hohlräume enthalten.

8. Schlauchfolienblaskopf (1) nach einem der vorstehenden Ansprüche,
**dadurch gekennzeichnet, dass**
die Befestigungsmittel (15) die Form eines Kreiszylinders haben.

9. Schlauchfolienblaskopf (1) nach einem der vorstehenden Ansprüche,
**dadurch gekennzeichnet, dass**
die Befestigungsmittel (15) vorzugsweise an ihren Enden mit Außengewinden (22) beaufschlagt sind.

10. Schlauchfolienblaskopf (1) nach einem der vorstehenden Ansprüche,
**dadurch gekennzeichnet, dass**
die Befestigungsmittel (15) an einem ihrer Enden mit einem Kopf (23) versehen sind.

11. Verfahren zur gegenseitigen Fixierung zumindest zweier Bauteile (5, 7, 8, 9), welche gemeinsam innerhalb eines Schlauchfolienblaskopfes (1) nach dem Oberbegriff des Anspruchs 1 kunststoffschmelzeführende Bereiche (14) begrenzen,
**dadurch gekennzeichnet, dass**
die Fixierung mit einer Mehrzahl von als kühlmittelführende Elemente ausgestalteten Befestigungsmitteln (15) vorgenommen wird.

12. Verfahren nach Anspruch 11,
**dadurch gekennzeichnet, dass** bei der Montage des Folienblaskopfies lediglich eine Vorfixierung der zumindest zwei Bauteile (5, 7, 8, 9) mit geringerer Kraft erfolgt,

13. Verfahren nach Anspruch 12,
**dadurch gekennzeichnet, dass**
durch die Befestigungselemente (15) Kühlmittel durchgeleitet wird, so dass die Anpresskraft der zumindest zwei Bauteile (5, 7, 8, 9) dadurch erhöht wird, dass sich die Bauteile während des Extrusionsprozesses stärker erwärmen und ausdehnen als die Befestigungselemente (15).

## Claims

1. Tubular film blowing head (1) for extruding single-slayer or multi-layer film, said blowing head comprising at least the following features:
• an annular nozzle gap (11);
• fastening means (15), which fasten in relation to one another at least two components (5, 7, 8, 9) that together delimit regions (14) carrying polymer melt within the tubular film blowing head;
• one fastening means (15) being designed as a coolant-carrying element (24), **characterized in that**
• a plurality of fastening means (15) designed as coolant-carrying elements are provided,
• some of the fastening means (15) containing coolant feed lines and others containing coolant discharge lines.

2. Tubular film blowing head according to Claim 1,
**characterized in that**
the holes through which the fastening means (15) pass are encased, at least in part, by a thermally insulating material (25).

3. Tubular film blowing head according to Claim 1,
**characterized in that**
in the region of the holes in the blowing head (1) through which the fastening means (15) pass cavities are provided and/or **in that** the fastening means and the inner walls of the holes together form cavities in the blowing head (1).

4. Tubular film blowing head according to one of the preceding claims,
**characterized in that**
the fastening means (15) are arranged acentrically in the blowing head (1).

5. Tubular film blowing head according to one of the preceding claims,
**characterized in that**
the fastening means (15) designed as coolant-carrying elements pass through the inner nozzle ring (9), the pins (7, 8) and the connecting plate (6) and fix them with respect to one another.

6. Tubular film blowing head according to one of the preceding claims,
**characterized in that**
the fastening means (15) designed as coolant-carrying elements pass through all the components that delimit the melt-carrying regions.

7. Tubular film blowing head (1) according to one of the preceding claims,
**characterized in that**
the fastening means (15) consist, at least in part, of a thermally insulating material (25) and/or contain cavities.

8. Tubular film blowing head (1) according to one of the preceding claims,
**characterized in that**
the fastening means (15) have the form of a circular cylinder.

9. Tubular film blowing head (1) according to one of the preceding claims,
**characterized in that**
the fastening means (15) are preferably provided with external threads (22) at their ends.

10. Tubular film blowing head (1) according to one of the preceding claims,
**characterized in that**
the fastening means (15) are provided with a head (23) at their ends.

11. Method for fixing in relation to one another at least two components (5, 7, 8, 9) that together delimit regions (14) carrying polymer melt within a tubular film blowing head (1) according to the preamble of Claim 1,
**characterized in that**
the fixing is performed with a plurality of fastening means (15) designed as coolant-carrying elements.

12. Method according to Claim 11,
**characterized in that** in the mounting of the film blowing head only a pre-fixing of the at least two components (5, 7, 8, 9) with relatively little force is performed.

13. Method according to Claim 12,
**characterized in that**
coolant is passed through the fastening elements (15), so that the pressing force of the at least two components (5, 7, 8, 9) is increased by the fact that the components heat up and expand more during the extrusion process than the fastening elements (15).

## Revendications

1. Tête de soufflage de feuilles tubulaires (1) pour l'extrusion de feuilles mono- ou multicouches, qui présente au moins les caractéristiques suivantes :
- une fente de filière annulaire (11),
- des moyens de fixation (15) qui fixent au moins deux composants (5, 7, 8, 9) l'un par rapport à l'autre, lesquels limitent ensemble des régions (14) conduisant la matière plastique en fusion à l'intérieur de la tête de soufflage de feuilles tubulaires,
- un moyen de fixation (15) étant configuré sous forme d'élément guidant du réfrigérant (24),
**caractérisée en ce**
- **qu'**il est prévu une pluralité de moyens de fixation (15) configurés sous forme d'éléments guidant du réfrigérant,
- une partie des moyens de fixation (15) contenant des conduites d'alimentation en réfrigérant et une autre partie contenant des conduites d'évacuation de réfrigérant.

2. Tête de soufflage de feuilles tubulaires selon la revendication 1,
**caractérisée en ce que**
les alésages à travers lesquels s'engagent les moyens de fixation (15) sont au moins en partie revêtus d'un matériau thermiquement isolant (25).

3. Tête de soufflage de feuilles tubulaires selon la revendication 1,
**caractérisée en ce que**
dans la région des alésages dans la tête de soufflage (1), à travers lesquels s'engagent les moyens de fixation (15), sont prévues des cavités et/ou **en ce que** les moyens de fixation et les parois intérieures des alésages forment ensemble des cavités dans la tête de soufflage (1).

4. Tête de soufflage de feuilles tubulaires selon l'une quelconque des revendications précédentes,
**caractérisée en ce que**
les moyens de fixation (15) sont disposés de manière décentrée dans la tête de soufflage (1).

5. Tête de soufflage de feuilles tubulaires selon l'une quelconque des revendications précédentes,
**caractérisée en ce que**
les moyens de fixation (15) configurés sous forme d'éléments guidant du réfrigérant viennent en prise à travers, et fixent les uns aux autres, la bague de filière interne (9), les mandrins (7, 8) et la plaque de raccordement (6).

6. Tête de soufflage de feuilles tubulaires selon l'une quelconque des revendications précédentes,
**caractérisée en ce que**
les moyens de fixation (15) configurés sous forme d'éléments guidant du réfrigérant viennent en prise à travers tous les composants qui limitent des régions conduisant la matière en fusion.

7. Tête de soufflage de feuilles tubulaires (1) selon l'une quelconque des revendications précédentes,
**caractérisée en ce que**
les moyens de fixation (15) se composent au moins en partie d'un matériau thermiquement isolant (25) et/ou contiennent des cavités.

8. Tête de soufflage de feuilles tubulaires (1) selon l'une quelconque des revendications précédentes,
**caractérisée en ce que**
les moyens de fixation (15) ont la forme d'un cylindre circulaire.

9. Tête de soufflage de feuilles tubulaires (1) selon l'une quelconque des revendications précédentes,
**caractérisée en ce que**
les moyens de fixation (15) sont sollicités de préférence au niveau de leurs extrémités ayant des filetages extérieurs (22).

10. Tête de soufflage de feuilles tubulaires (1) selon l'une quelconque des revendications précédentes,
**caractérisée en ce que**
les moyens de fixation (15) sont pourvus d'une tête (23) au niveau de l'une de leurs extrémités.

11. Procédé de fixation l'un à l'autre d'au moins deux composants (5, 7, 8, 9) qui limitent ensemble, à l'intérieur d'une tête de soufflage de feuilles tubulaires (1) selon le préambule de la revendication 1, des régions (14) conduisant la matière plastique en fusion,
**caractérisé en ce que**
la fixation est effectuée avec une pluralité de moyens de fixation (15) configurés sous forme d'éléments guidant du réfrigérant.

12. Procédé selon la revendication 11,
**caractérisé en ce que**
lors du montage de la tête de soufflage de feuilles, seulement une préfixation des au moins deux composants (5, 7, 8, 9) s'effectue avec une force relativement faible.

13. Procédé selon la revendication 12,
**caractérisé en ce que**
du réfrigérant est conduit à travers les éléments de fixation (15), de sorte que la force d'application des au moins deux composants (5, 7, 8, 9) soit augmentée par le fait que les composants, pendant le processus d'extrusion, se réchauffent et se dilatent plus que les éléments de fixation (15).
